# EUROPÄISCHE PATENTANMELDUNG

(11) **EP 3 722 140 A1**
(43) Veröffentlichungstag der Anmeldung: **14.10.2020**
(21) Anmeldenummer: 20154588.6
(22) Anmeldetag: 30.01.2020
(51) Int. Cl.: B60L 7/10, B60L 7/22, B60W 30/18

(54) **VERFAHREN ZUM REKUPERATIVEN BREMSEN IN EINEM FAHRZEUGANHÄNGER**

(30) Priorität: 11.04.2019 DE 102019205199
(71) Anmelder: Robert Bosch GmbH, 70442 Stuttgart (DE)
(72) Erfinder: Knorr, Slawa, 71543 Wuestenrot-Finsterrot (DE)

(57) **Zusammenfassung**

Bei einem Verfahren zum rekuperativen Bremsen in einem Fahrzeuganhänger, in dem mindestens ein mit einem Anhängerrad gekoppelter Generator angeordnet ist, der eine Batterie speist, leitet ein Steuergerät nach Erhalt oder Generierung eines Bremseinleitungssignals einen Bremsvorgang mit rekuperativem Bremsen ein.

## Beschreibung

Die Erfindung bezieht sich auf ein Verfahren zum rekuperativen Bremsen in einem Fahrzeuganhänger, in dem mindestens ein mit einem Anhängerrad gekoppelter Generator und eine Batterie angeordnet sind, die vom Generator gespeist wird.

### Stand der Technik

Es ist bekannt, Wohnanhänger mit einer 12 V-Batterie auszustatten, um elektrische Verbraucher im abgekuppelten Zustand des Wohnanhängers zu versorgen. Die Batterie im Wohnanhänger kann während der Fahrt über das Zugfahrzeug zum Laden der Batterie mit elektrischer Energie versorgt werden. Dies erfolgt über eine genormte Steckerverbindung, die üblicherweise einen 13-poligen Stecker als Schnittstelle zwischen dem Zugfahrzeug und dem Anhänger aufweist. Die Energieübertragung ist auf 12 V-Batterien beschränkt.

### Offenbarung der Erfindung

Mithilfe des erfindungsgemäßen Verfahrens kann in einem Fahrzeuganhänger rekuperativ gebremst werden. Der Fahrzeuganhänger ist mit einer elektrischen Maschine ausgestattet, die mit einem Anhängerrad gekoppelt ist und als Generator betrieben werden kann. Im Fahrzeuganhänger befindet sich des Weiteren eine Batterie, die mit dem Generator gekoppelt ist, so dass im Generatorbetrieb die Batterie mit elektrischer Energie vom Generator versorgt und aufgeladen wird. Im Generatorbetrieb treibt die Bewegung des Anhängerrades den mit dem Anhängerrad mechanisch gekoppelten Generator an.

Im Fahrzeuganhänger befindet sich des Weiteren ein Steuergerät, das den Generator ansteuert. Das Steuergerät leitet nach Erhalt oder Generierung eines Bremseinleitungssignals im Fahrzeuganhänger einen Bremsvorgang mit rekuperativem Bremsen über den Generator ein.

Diese Vorgehensweise hat den Vorteil, dass das Laden der Batterie im Fahrzeuganhänger unabhängig vom Zugfahrzeug oder einer externen Stromquelle erfolgt. Vielmehr kann der Fahrbetrieb für das Laden der Batterie im Fahrzeuganhänger genutzt werden. Die Stromversorgung im Fahrzeuganhänger ist autark und nicht auf eine elektrische Energieübertragung von außen auf die Fahrzeugbatterie abhängig. Des Weiteren ist es nicht erforderlich, kostenintensive Solarmodule am Fahrzeuganhänger anzubringen, um die Batterie im oder am Fahrzeuganhänger zu laden, wenngleich diese Möglichkeit ergänzend vorgesehen sein kann.

Vorteilhaft ist es des Weiteren, dass über das rekuperative Bremsen verhältnismäßig viel Energie erzeugbar ist und die Batterie in kurzer Zeit aufgeladen werden kann. Außerdem ist es vorteilhaft, dass beim rekuperativen Bremsen ein auf den Fahrzeuganhänger wirkendes Bremsmoment wirkt, wodurch die mechanische Bremse im Fahrzeuganhänger entlastet wird.

Das Verfahren kann auf verschiedenartige Fahrzeuganhänger angewandt werden. In Betracht kommen einachsige oder mehrachsige Anhänger, beispielsweise zum Lastentransport, aber auch ein- oder mehrachsige Wohnanhänger.

Die elektrische Maschine, die im Fahrzeuganhänger als Generator verwendet wird, kann auf verschiedene Weisen mit einem oder mehreren Anhängerrädern mechanisch gekoppelt werden. In Betracht kommt beispielsweise ein Radnabenmotor als Generator oder eine elektrische Maschine, die mit der Achse zwischen zwei seitlich gegenüberliegenden Fahrzeugrädern gekoppelt ist.

Es genügt, dass beispielsweise die elektrische Verbindung zwischen dem Zugfahrzeug und dem Fahrzeuganhänger über eine Steckerverbindung hergestellt wird, bei der es sich um eine genormte Verbindung handelt, beispielsweise um eine 13-polige Steckerverbindung. Die Übertragung elektrischer Energie über die Steckerverbindung zur Batterie im Fahrzeuganhänger ist nicht zwingend erforderlich, kann aber gegebenenfalls ergänzend durchgeführt werden.

Ein weiterer Vorteil der erfindungsgemäßen Vorgehensweise liegt darin, dass Batterien mit einer höheren Spannung als 12 V eingesetzt werden können, beispielsweise Batterien mit einer 48 V-Spannung.

Der rekuperative Bremsvorgang wird über das Bremseinleitungssignal eingeleitet, dass das Steuergerät im Fahrzeuganhänger empfängt oder generiert. Das Bremseinleitungssignal wird entweder im Zugfahrzeug erzeugt und auf das Steuergerät im Fahrzeuganhänger übertragen oder, in alternativer Ausführung, unmittelbar im Fahrzeuganhänger erzeugt. Bei Erzeugung des Bremseinleitungssignals im Zugfahrzeug kann das Signal entweder über die Steckerverbindung zwischen dem Zugfahrzeug und dem Fahrzeuganhänger oder drahtlos übertragen werden.

Bei dem Bremseinleitungssignal handelt es sich vorteilhafterweise um ein Bremssignal, das im Zugfahrzeug bei Betätigung der Fahrzeugbremse erzeugt wird. Beispielsweise wird als Bremseinleitungssignal ein Bremslichtsignal verwendet, das bei Betätigung der Fahrzeugbremse im Zugfahrzeug über die Steckerverbindung auf den Fahrzeuganhänger übertragen wird, um dort die Bremslichter zu aktivieren. Das Bremslichtsignal kann im Steuergerät im Fahrzeuganhänger auch für die Aktivierung des Generatorbetriebs verwendet werden.

Das Bremseinleitungssignal kann gegebenenfalls auch im Fahrzeuganhänger erzeugt werden. In diesem Fall stellt der Fahrzeuganhänger im Hinblick auf seine Energieversorgung ein vollständig autarkes System dar. Das Bremseinleitungssignal wird beispielsweise im Steuergerät auf der Grundlage von Sensorsignalen erzeugt, die in einer Sensorik im Fahrzeuganhänger ermittelt werden. Bei den Sensorsignalen handelt es sich beispielsweise um Raddrehzahlsignale und/oder um Beschleunigungssignale.

Gemäß noch einer weiteren vorteilhaften Ausführung wird die Generatorleistung als Funktion der Zeitdauer des Bremseinleitungssignals festgelegt. Dies hat den Vorteil, dass das Bremseinleitungssignal nicht nur zum Beginn des rekuperativen Bremsens verwendet wird, sondern darüber hinaus auch noch zur Bestimmung der Generatorleistung herangezogen wird. Hierbei ist es zweckmäßig, dass mit fortschreitender Zeitdauer des Bremseinleitungssignals die Generatorleistung erhöht wird, wobei die Erhöhung gemäß einer vorgegebenen Funktion von der Zeitdauer abhängt und beispielsweise linear mit der Zeitdauer ansteigt. Diese Vorgehensweise hat den Vorteil, dass das rekuperative Bremsen vom Fahrer intuitiv über die Betätigung des Bremspedals gesteuert werden kann. Mit fortschreitender Betätigung des Bremspedals wird im Fahrzeuganhänger die Generatorleistung und damit auch das Bremsmoment erhöht. Falls der Fahrer eine geringere Bremswirkung wünscht, kann er den Fuß vom Bremspedal nehmen, so dass keine weitere Erhöhung des Bremsmomentes über das rekuperative Bremsen erfolgt.

Vorteilhafterweise bleibt jedoch der rekuperative Bremsvorgang noch bestehen, auch wenn der Fahrer den Fuß vom Bremspedal nimmt. Dementsprechend dient das Bremseinleitungssignal zum Ingangsetzen des rekuperativen Bremsens im Fahrzeuganhänger, wobei der Wegfall des Bremseinleitungssignals, beispielsweise das Wegnehmen des Fußes vom Bremspedal, nicht automatisch zu einem Beenden des rekuperativen Bremsens führt. Diese Vorgehensweise hat den Vorteil, dass ein Fahrverhalten und entsprechend ein subjektives Fahrgefühl wie bei einem Fahren im Fahrzeug mit Automatikgetriebe erzeugt wird, bei dem bei Bergabfahrten und Bremsen ein Schleppmoment wirksam ist, das durch selbsttätiges Herunterschalten im Getriebe als Bremsmoment wirkt, wobei ein Hochschalten und Reduzieren des Schleppmomentes erst erfolgt, wenn der Fahrer das Gaspedal betätigt. Eine entsprechende Wirkung kann auch mit dem rekuperativen Bremsen im Fahrzeuganhänger erzielt werden, indem wie vorbeschrieben über den Generatorbetrieb solange ein Bremsmoment im Fahrzeuganhänger erzeugt wird, bis das rekuperative Bremsen aktiv aufgehoben wird.

Das Beenden des rekuperativen Bremsens wird, gemäß weiterer vorteilhafter Ausführung, mithilfe eines Bremsbeendigungssignals durchgeführt, das auf das Steuergerät im Fahrzeuganhänger übertragen wird bzw. im Steuergerät erzeugt wird. Solange kein Bremsbeendigungssignal vorliegt, wird der in Gang gesetzte Rekuperationsvorgang fortgesetzt. Bei dem Bremsbeendigungssignal handelt es sich beispielsweise um ein Signal, das bei Betätigung des Beschleunigungspedals im Zugfahrzeug erzeugt und vom Zugfahrzeug auf das Steuergerät im Fahrzeuganhänger übertragen wird. Alternativ zum Zugfahrzeug kann das Bremsbeendigungssignal auch unmittelbar im Steuergerät im Fahrzeuganhänger erzeugt werden, wenn beispielsweise über die Sensorik im Fahrzeuganhänger festgestellt wird, dass eine Bergabfahrt beendet und die Fahrt in der Ebene oder bergauf fortgesetzt wird.

Die Sensorik, die gegebenenfalls im Fahrzeuganhänger verbaut ist, kann in das Steuergerät im Fahrzeuganhänger integriert oder separat vom Steuergerät ausgebildet sein, jedoch mit dem Steuergerät verbunden sein, damit die Sensorsignale auf das Steuergerät übertragbar sind. Die Sensorik umfasst beispielsweise Raddrehzahlsensoren zum Ermitteln der aktuellen Raddrehzahlen im Fahrzeuganhänger, Beschleunigungssensoren, insbesondere zur Ermittlung der Längsbeschleunigung und/oder der Querbeschleunigung im Fahrzeuganhänger und/oder einen Gierratensensor.

Gemäß noch einer weiteren vorteilhaften Ausführung werden dem Fahrer im Zugfahrzeug während der Fahrt Informationen über sein Fahrverhalten ermittelt, um den Rekuperationsbetrieb zu optimieren. Beispielsweise kann dem Fahrer die Information mitgeteilt werden, bei einer Bergabfahrt in den Leerlauf zu schalten, damit das Schleppmoment des Antriebsmotors, insbesondere eines Verbrennungsmotors wegfällt und die dadurch freiwerdende Leistung für den Rekuperationsbetrieb zur Verfügung steht.

In einer alternativen Ausführung ist es auch möglich, dass bei Zugfahrzeugen, die mit einem Automatikgetriebe ausgestattet sind, selbsttätig und somit ohne Zutun des Fahrers in eine Neutral- bzw. Leerlaufstellung geschaltet wird, um eine möglichst hohe Rekuperationsleistung über den Generatorbetrieb im Fahrzeuganhänger zu ermöglichen.

Gemäß noch einer weiteren vorteilhaften Ausführung wird das Bremsverhältnis zwischen dem rekuperativen Bremsen mithilfe des Generators und einer zusätzlichen mechanischen Anhängerbremse selbsttätig geregelt. Hierbei ist es vorteilhaft, dass primär rekuperativ gebremst und nur ergänzend über die mechanische Anhängerbremse gebremst wird. Diese Vorgehensweise stellt sicher, dass die Rekuperationsleistung im Fahrzeuganhänger maximiert wird. Außerdem wird auf diese Weise die Abnutzung der mechanischen Anhängerbremse reduziert.

Die mechanische Anhängerbremse kann zusätzlich zum rekuperativen Bremsen ausgeschaltet werden, falls ein Bremsmoment erforderlich ist, das allein über das rekuperative Bremsen nicht erreicht werden kann.

Gegebenenfalls kann von dem Grundsatz, dass primär rekuperativ gebremst wird, abgewichen werden, sofern dies die Umstände erforderlich machen. Beispielsweise bei einem hohen Ladezustand der Batterie kann es zweckmäßig sein, zusätzlich zum rekuperativen Bremsen auch die mechanische Anhängerbremse zu betätigen oder gegebenenfalls vollständig über die mechanische Anhängerbremse zu bremsen.

Die Erfindung bezieht sich des Weiteren auf ein Steuergerät zur Ansteuerung des Generators, wobei in dem Steuergerät die vorbeschriebenen Verfahrensschritte durchgeführt werden, insbesondere das Bremseinleitungssignal verarbeitet oder gegebenenfalls erzeugt und der Generator angesteuert werden. Auch das Bremsbeendigungssignal kann im Steuergerät verarbeitet und gegebenenfalls erzeugt werden. Des Weiteren ist es möglich, dass gegebenenfalls auch die mechanische Anhängerbremse von dem Steuergerät angesteuert wird.

Die mechanische Anhängerbremse erzeugt durch mechanische Reibung ein Bremsmoment. Die mechanische Anhängerbremse kann in an sich bekannter Weise als hydraulische Fahrzeugbremse im Fahrzeuganhänger ausgebildet sein.

Die Erfindung bezieht sich außerdem auf einen Fahrzeuganhänger mit einem vorbeschriebenen Steuergerät, mit mindestens einem Generator und mit einer vom Generator gespeisten Batterie. Das Steuergerät ist zum Empfang oder zum Erzeugen eines Bremseinleitungssignals und gegebenenfalls auch eines Bremsbeendigungssignals ausgerüstet. Der Fahrzeuganhänger umfasst des Weiteren vorteilhafterweise auch eine mechanische Anhängerbremse. Außerdem kann es zweckmäßig sein, im Fahrzeuganhänger oder gegebenenfalls im Steuergerät im Fahrzeuganhänger eine Sensorik vorzusehen.

Schließlich bezieht sich die Erfindung auch auf ein Computerprogrammprodukt mit einem Programmcode, der dazu ausgelegt ist, die vorbeschriebenen Verfahrensschritte auszuführen. Das Computerprogrammprodukt läuft in einem vorbeschriebenen Steuergerät ab.

Weitere Vorteile und zweckmäßige Ausführungen sind den weiteren Ansprüchen, der Figurenbeschreibung und den Zeichnungen zu entnehmen. Es zeigen:
- Fig. 1: ein Zugfahrzeug mit einem Fahrzeuganhänger, in welchem ein mit den Anhängerrädern gekoppelter Generator angeordnet ist, der eine im Fahrzeuganhänger mitgeführte Batterie speist,
- Fig. 2: ein Ablaufschema mit Verfahrensschritten zum rekuperativen Bremsen im Fahrzeuganhänger.

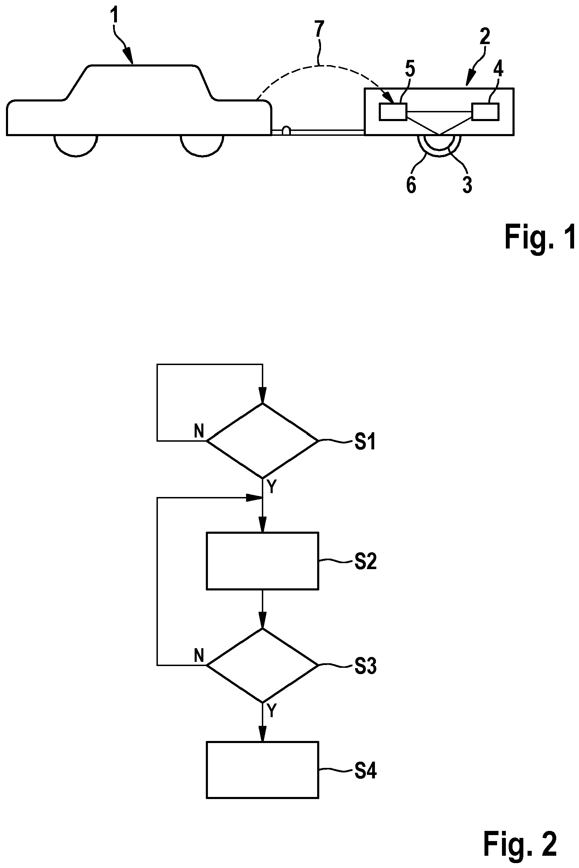

In Fig. 1 ist ein Zugfahrzeug 1 dargestellt, an das ein einachsiger Fahrzeuganhänger 2 angehängt ist. In dem Fahrzeuganhänger 2 befindet sich mindestens eine elektrische Maschine 3, die als Generator fungiert und mit mindestens einem Anhängerrad 6 mechanisch gekoppelt ist. Der Generator 3 ist mit einer ebenfalls im Fahrzeuganhänger 2 angeordneten Batterie 4 elektrisch verbunden, so dass im Generatorbetrieb die Batterie 4 von dem Generator 3 geladen wird. Außerdem befindet sich im Fahrzeuganhänger 2 ein Steuergerät 5, das den Generator 3 steuert. Das Steuergerät ist außerdem mit der Batterie 4 verbunden und empfängt von der Batterie 4 Informationen über den aktuellen Ladezustand der Batterie.

Die mechanische Kopplung zwischen dem Generator 3 und dem Anhängerrad 6 erfolgt in der Weise, dass im Generatorbetrieb das rollende Anhängerrad 6 den Generator 3 antreibt. Hierbei entsteht ein Bremsmoment, welches das Anhängerrad 6 abbremst. Der Generatorbetrieb entspricht somit einem rekuperativen Bremsen.

Der Generator 3 ist entweder als Nabenmotor ausgebildet und in die Nabe des Anhängerrades 6 integriert. Alternativ ist es auch möglich, dass der Generator 3 mit der Achse zwischen den beiden seitlich angeordneten Anhängerrädern 6 des Fahrzeuganhängers 2 drehgekoppelt ist. Im Fall von Radnabenmotoren ist es zweckmäßig, dass in jedes Anhängerrad 6 jeweils eine elektrische Maschine integriert ist, die als Generator wirkt.

Wie mit dem gestrichelten Pfeil 7 dargestellt, kommuniziert das Steuergerät 5 im Fahrzeuganhänger 2 mit dem Zugfahrzeug 1 und empfängt Informationen vom Zugfahrzeug 1. Der Informationsaustausch erfolgt vorzugsweise über eine genormte Steckerverbindung, beispielsweise eine 13-polige Steckerverbindung. Hier können verschiedene Informationen vom Zugfahrzeug 1 auf den Fahrzeuganhänger 2 übertragen werden, unter anderem ein Bremslichtsignal, das bei einer Betätigung der Fahrzeugbremse im Fahrzeug 1 erzeugt wird und Bremslichter im Fahrzeuganhänger 2 aktiviert.

Es kann gegebenenfalls zweckmäßig sein, in das Steuergerät eine Sensorik zu integrieren oder unabhängig vom Steuergerät 5 eine Sensorik in den Fahrzeuganhänger 2 zu integrieren. Über die Sensorik sind beispielsweise die Raddrehzahlen der Anhängerräder 6, die Längsbeschleunigung, die Querbeschleunigung und/oder die Gierrate im Fahrzeuganhänger 2 zu ermitteln.

Das rekuperative Bremsen wird über ein Bremseinleitungssignal gestartet. Als Bremseinleitungssignal dient beispielsweise das Bremslichtsignal, das im Zugfahrzeug 1 bei Betätigung des Bremspedals erzeugt und über die Steckerverbindung vom Zugfahrzeug 1 auf das Steuergerät 5 im Fahrzeuganhänger 2 übertragen wird. Im Steuergerät 5 wird der Generator 2 in den Generatorbetrieb versetzt, so dass entsprechend der Bremsvorgang mit rekuperativen Bremsen begonnen und die Batterie 4 geladen wird.

Zweckmäßigerweise hängt die Generatorleistung des Generators 3 dahingehend vom Bremseinleitungssignal - das Bremslichtsignal - ab, dass mit fortschreitender Zeitdauer des Signals auch die Generatorleistung erhöht wird. Bleibt beispielsweise der Fahrer bei einer Bergabfahrt mit dem Fuß auf dem Bremspedal, steigt entsprechend die Zeitdauer des Bremslichtsignals und damit des Bremseinleitungssignals an. Die Generatorleistung des Generators 3 kann von dem Steuergerät 5 entsprechend kontinuierlich erhöht werden. Es kann beispielsweise zweckmäßig sein, einen linearen Zusammenhang mit der Zeitdauer der Aktivierung des Bremslichtsignals vorzugeben, so dass die Generatorleistung mit fortschreitender Zeitdauer des Bremslichtsignals linear ansteigt.

In alternativer Ausführung ist es auch möglich, eine konstante Generatorleistung und damit ein konstantes Bremsmoment vorzugeben.

In noch einer weiteren zweckmäßigen Ausführung wird die Generatorleistung adaptiv angepasst, beispielhaft in der Weise, dass eine vom Fahrer im Zugfahrzeug 1 vorgegebene Geschwindigkeit konstant eingehalten wird, ohne dass die Generatorleistung kontinuierlich erhöht wird. Dementsprechend kann beispielsweise bei einer Bergabfahrt mit konstantem Gefälle auch eine konstante Motorleistung und eine konstante Bremsleistung über den Generator eingestellt werden.

Vorteilhaft ist es außerdem, selbsttätig das Verhältnis der Bremsmomenterzeugung in dem Fahrzeuganhänger 2 zwischen der Generatorleistung und einer mechanischen Anhängerbremse einzustellen. In bevorzugter Ausführung wird primär rekuperativ über den Generatorbetrieb gebremst und nur ergänzend über die mechanische Anhängerbremse im Fahrzeuganhänger 2, falls das geforderte Bremsmoment nicht allein über den Generatorbetrieb erzeugt werden kann.

Sofern eine Systemgröße gegen diese Aufteilung von Bremsmoment zwischen Generator und Anhängerbremse spricht, kann entsprechend abgewichen werden. So ist es beispielsweise zweckmäßig, das Verhältnis auch in Abhängigkeit des aktuellen Lagezustandes der Batterie 4 zu steuern. Bei vollgeladener Batterie wird entsprechend kein Generatorbetrieb durchgeführt, sondern über die mechanische Anhängerbremse gebremst.

Zur Beendigung des Generatorbetriebs mit rekuperativem Bremsen wird ein Bremsbeendigungssignal erzeugt, das im Steuergerät 5 verarbeitet wird und entsprechend zur Beendigung des rekuperativen Bremsens führt. Das Beendigungssignal wird vorzugsweise im Zugfahrzeug 1 erzeugt, beispielsweise indem der Fahrer das Beschleunigungspedal betätigt, was auf das Steuergerät 5 übertragen wird und dort als ein Bremsbeendigungssignal interpretiert wird. Zusätzlich oder alternativ ist es auch möglich, ein Bremsbeendigungssignal auf anderweitige Weise zu erzeugen bzw. von weiteren Fahrzuständen abhängig zu machen. Es kann beispielsweise zweckmäßig sein, ein Bremsbeendigungssignal aus den Sensorinformationen der Sensorik im Fahrzeuganhänger 2 abzuleiten. Wird beispielsweise über die Sensorik festgestellt, dass der Fahrzeuganhänger 2 nicht mehr bergab fährt, sondern in der Ebene oder bergauf fährt, kann selbsttätig ein Bremsbeendigungssignal erzeugt und der Generatorbetrieb beendet werden. Gleiches gilt bei einem hohen Ladezustand der Batterie 4.

In Fig. 2 ist der grundsätzliche Verfahrensablauf zum Starten und Beenden des Generatorbetriebs dargestellt. Das Verfahren läuft in dem Steuergerät 5 ab, das sich im Fahrzeuganhänger 2 befindet.

Zunächst wird in einem ersten Verfahrensschritt S1 überprüft, ob ein Bremsbeendigungssignal vorliegt. Ist dies nicht der Fall, bleibt es beim aktuellen Zustand ohne Generatorbetrieb. In diesem Fall wird der Nein-Verzweigung ("N") folgend wieder zum Beginn des Verfahrensschrittes S1 zurückgekehrt und der Schritt S1 in zyklischen Abständen erneut durchlaufen.

Ergibt dagegen die Abfrage im Verfahrensschritt S1, dass ein Bremseinleitungssignal vorliegt, wird der Ja-Verzweigung ("Y") folgend zum nächsten Verfahrensschritt S2 vorgerückt, in welchem der Generatorbetrieb des Generators 3 im Fahrzeuganhänger 2 aufgenommen wird und rekuperativ gebremst wird. Im nächsten Verfahrensschritt S3 erfolgt die Abfrage in zyklischen Abständen, ob ein Bremsbeendigungssignal vorliegt. Ist dies nicht der Fall, wird der Nein-Verzweigung folgend wieder zum Beginn des Verfahrens S2 zurückgekehrt und der Generatorbetrieb fortgeführt. Ergibt dagegen die Abfrage im Schritt S3, dass ein Bremsbeendigungssignal vorliegt, wird zum Schritt S4 vorgerückt und der Generatorbetrieb beendet, so dass auch kein Bremsmoment mehr erzeugt wird.

## Patentansprüche

1. Verfahren zum rekuperativen Bremsen in einem Fahrzeuganhänger (2), in dem mindestens ein mit einem Anhängerrad (6) gekoppelter Generator (3) angeordnet ist, der eine im Fahrzeuganhänger (2) mitgeführte Batterie (4) speist, wobei ein den Generator (3) ansteuerndes Steuergerät (5) im Fahrzeuganhänger (2) nach Erhalt oder Generierung eines Bremseinleitungssignals einen Bremsvorgang mit rekuperativem Bremsen über den Generator (3) einleitet.

2. Verfahren nach Anspruch 1, **dadurch gekennzeichnet, dass** das Bremseinleitungssignal im Zugfahrzeug (1) erzeugt und auf das Steuergerät (5) im Fahrzeuganhänger (2) übertragen wird.

3. Verfahren nach Anspruch 2, **dadurch gekennzeichnet, dass** das Bremseinleitungssignal über eine Steckerverbindung zwischen dem Zugfahrzeug (1) und dem Fahrzeuganhänger (2) übertragen wird, insbesondere über eine genormte Steckerverbindung.

4. Verfahren nach Anspruch 2 oder 3, **dadurch gekennzeichnet, dass** das Bremseinleitungssignal im Zugfahrzeug (1) bei Betätigung der Fahrzeugbremse erzeugt wird.

5. Verfahren nach einem der Ansprüche 2 bis 4, **dadurch gekennzeichnet, dass** als Bremseinleitungssignal ein Bremslichtsignal verwendet wird, das bei Betätigung der Fahrzeugbremse im Zugfahrzeug (1) erzeugt wird.

6. Verfahren nach einem der Ansprüche 1 bis 5, **dadurch gekennzeichnet, dass** die Generatorleistung mit fortschreitender Zeitdauer des Bremseinleitungssignals erhöht wird.

7. Verfahren nach einem der Ansprüche 1 bis 6, **dadurch gekennzeichnet, dass** die Generatorleistung bestehen bleibt, wenn das Bremseinleitungssignal wegfällt.

8. Verfahren nach einem der Ansprüche 1 bis 7, **dadurch gekennzeichnet, dass** im Zugfahrzeug (1) ein Bremsbeendigungssignal zum Beenden des rekuperativem Bremsens erzeugt und auf das Steuergerät (5) im Fahrzeuganhänger (2) übertragen bzw. im Steuergerät (5) im Fahrzeuganhänger (2) erzeugt wird.

9. Verfahren nach einem der Ansprüche 1 bis 8, **dadurch gekennzeichnet, dass** in einer Sensorik im Fahrzeuganhänger (2) ein Bremsbeendigungssignal zum Beenden des rekuperativem Bremsens erzeugt und auf das Steuergerät (5) im Fahrzeuganhänger (2) übertragen wird.

10. Verfahren nach einem der Ansprüche 1 bis 9, **dadurch gekennzeichnet, dass** im Fahrzeuganhänger (2) primär rekuperativ gebremst und nur ergänzend über eine mechanische Anhängerbremse gebremst wird.

11. Steuergerät zur Ansteuerung eines Generators (3) in einem Fahrzeuganhänger (2) zur Durchführung des Verfahrens nach einem der Ansprüche 1 bis 10.

12. Fahrzeuganhänger mit einem Steuergerät (5) nach Anspruch 11, mit mindestens einem Generator (3) und mit einer vom Generator (3) gespeisten Batterie (4).

13. Computerprogrammprodukt mit einem Programmcode, der dazu ausgelegt ist, Schritte des Verfahrens nach einem der Ansprüche 1 bis 10 auszuführen, wenn das Computerprogrammprodukt in einem Steuergerät (5) gemäß Anspruch 11 abläuft.
